# EUROPÄISCHE PATENTSCHRIFT

(11) **EP 2 414 079 B1**
(45) Veröffentlichungstag und Bekanntmachung des Hinweises auf die Patenterteilung: **13.07.2016**
(21) Anmeldenummer: 10711666.7
(22) Anmeldetag: 26.03.2010
(51) Int. Cl.: B01D 53/94, B01J 29/74, B01J 29/068

(54) **ALTERUNGSSTABILER KATALYSATOR ZUR OXIDATION VON NO ZU NO2 IN ABGASSTRÖMEN**
AGE-RESISTANT CATALYST FOR OXIDATION OF NO TO NO2 IN EXHAUST STREAMS
CATALYSEUR STABLE AU VIELLISSEMENT POUR L'OXIDATION DE NO EN NO2 DANS DES FLUX DE GAZ D'ÉCHAPPEMENT

(30) Priorität: 30.03.2009 DE 102009015592
(43) Veröffentlichungstag der Anmeldung: 08.02.2012
(73) Patentinhaber: Clariant Produkte (Deutschland) GmbH, 65929 Frankfurt am Main (DE)
(72) Erfinder: MANOYLOVA, Olga, 80805 München (DE); HUTT, Markus, 80939 München (DE); WANNINGER, Klaus, 83059 Kolbermoor (DE); TIßLER, Arno, 93105 Tegernheim (DE)
(74) Vertreter: Clariant Produkte (Deutschland) GmbH
(86) Internationale Anmeldenummer: PCT/EP2010/054035
(87) Internationale Veröffentlichungsnummer: WO 2010/112431

(56) Entgegenhaltungen:
- WO-A1-96/40419
- WO-A2-2009/138204
- DE-A1-102008 023 472
- US-A- 4 912 072
- US-A1- 2006 035 780

## Beschreibung

Die vorliegende Erfindung betrifft ein Verfahren zur Herstellung eines erfindungsgemäßen Platin enthaltenden Katalysators, den erfindungsgemäßen Platin enthaltenden Katalysator sowie die Verwendung des Platin enthaltenden Katalysators als Oxidationskatalysator und Kohlenwasserstoffspeicher.

Zu Beginn der Abgasreinigung von Verbrennungsmotoren wurden nur die Abgase von Benzinmotoren mit Dreiwege-Katalysatoren (TWC) gereinigt. Dabei werden die Stickoxide mit den reduzierenden Kohlenwasserstoffen (HC) und Kohlenmonoxid (CO) reduziert.

Seit etwa 15 Jahren versucht man auch die Abgase von Dieselmotoren mit Katalysatoren nachzubehandeln. Das Abgas von Dieselmotoren weist Kohlenmonoxid, unverbrannte Kohlenwasserstoffe, Stickoxide und Rußpartikel als Luftschadstoffe auf. Die unverbrannten Kohlenwasserstoffe umfassen Paraffine, Olefine, Aldehyde und Aromaten.

Ein Abgassystem für Dieselverbrennungsmotoren besteht in der Regel aus den folgenden Komponenten:
- Diesel-Oxidationskatalysator (DOC) zur Oxidation von Kohlenwasserstoffen und als Kohlenwasserstoffspeicher im Kaltstart;
- Dieselpartikelfilter (DPF) zur Verminderung der Partikelemissionen;
- optional ein Hydrolyse-Katalysator zur Harnstoffzersetzung;
- SCR-Katalysator (selective catalytic reduction) zur Reduktion der Stickoxide;
- Sperrkatalysator als Ammoniak-Oxidationskatalysator.

Unter DOC (Diesel-Oxidationskatalysator) versteht der Fachmann einen Katalysator, welcher vorzugsweise im Kaltstart eine Kohlenwasserstoff-Speicherfunktion erfüllt und im Normalbetrieb unverbrannte Kohlenwasserstoffe oxidiert. Die Behandlung der Abgase von Dieselverbrennungsmotoren mit Katalysatoren erfordert konzeptionelle Änderungen an den Katalysatormaterialien, da ein Dieselmotor im Gegensatz zu einem Benzinmotor immer unter Sauerstoffüberschuss betrieben wird und der Katalysator somit nie reduktiven Bedingungen ausgesetzt ist.

Seit dem Aufkommen der Diskussion um die Feinstaubproblematik werden den DOC-Katalysatoren noch Partikelfilter nachgeschaltet. Partikelfilter (DPF, Dieselpartikelfilter) werden eingesetzt, um Rußpartikel aus dem Abgas von Verbrennungsmotoren, speziell Dieselmotoren, herauszufiltern und so deren Ausstoß in die Atmosphäre zu vermindern. Dabei kommen verschiedene Filterkonzepte, wie z. B. so genannte "Wall-flow-Filter" oder Filter aus keramischen oder metallischen Schäumen zur Anwendung. Die eigentliche Schwierigkeit besteht aber nicht in der Filtration der Rußpartikel, sondern in der Regeneration der eingesetzten Filter. Kohlenstoffruß verbrennt je nach betriebsbedingter Zusammensetzung der Partikel spontan erst bei Temperaturen zwischen 500°C und 700°C.

Partikelfilter neuerer Generation müssen aktiv regeneriert werden. Das bedeutet, dass immer wieder eine so hohe Temperatur auf dem DOC erzeugt werden muss, dass der Ruß auf dem nachgeschalteten DPF zündet und abbrennt. Daher spielt die thermische Alterung der DOC-Katalysatoren heute eine wichtige Rolle.

Dieselfahrzeuge neuerer Generation werden gegenwärtig stromabwärts zum Dieselpartikelfilter mit einer Baueinheit ausgestattet, welche eine selektive katalytische Reduktion von Stickoxiden mithilfe eines sogenannten SCR-Katalysators bewerkstelligen kann. Mit SCR (selective catalytic reduction) wird die selektive katalytische Reduktion von Stickoxiden aus Abgasen von Verbrennungsmotoren und auch Kraftwerken bezeichnet. Mit einem SCR-Katalysator werden nur die Stickoxide NO und NO₂ (allgemein als NOₓ bezeichnet) selektiv reduziert, wobei für die Reaktion gewöhnlich NH₃ (Ammoniak) zugemischt wird. Als Reaktionsprodukt entstehen daher nur die unbedenklichen Stoffe Wasser und Stickstoff.

Von besonderer Wichtigkeit ist daher heute, neben der Oxidation von Kohlenwasserstoffen, die Oxidation von NO zu NO₂ in dem Dieseloxidationskatalysator. Das NO₂ erleichtert die Regeneration des nachfolgenden Dieselpartikelfilters, d.h. den Rußabbrand (siehe beispielsweise J. Choo et al., Science of the total environment (2008) 396-401; M. Jeguirim et al. Applied Catalysis B: Environmental, 76 (2007), 235-240 oder K. Yamamoto et al., Proceedings of the Combustion institute, 32(1) (2009), 1965-1972). Darüber hinaus kann ein Gemisch aus NO/NO₂ schneller durch selektive katalytische Reduktion (SCR) mit Ammoniak zu Stickstoff und Luft zersetzt werden als reines NO (siehe beispielsweise A. Grossale, et al., Journal of Catalysis, 256 (2008), 312 bis 322 oder M. Schwidder, et al., Journal of Catalysis, 259 (2008), 96 bis 103), so dass hier die Aktivität des DOC für die Oxidation von NO zu NO₂ auch noch nach Alterung des Katalysators sehr hoch sein muss.

Somit sind Katalysatoren erforderlich, die unter den Betriebsbedingungen der Dieselabgasnachbehandlung eine geringere Alterungstendenz aufweisen als dies im Stand der Technik bisher möglich ist.

Im Stand der Technik sind neben Pt-basierten Katalysatoren auch Katalysatoren bekannt, die sowohl Pt als auch Pd enthalten. Ferner enthalten DOC-Katalysatoren häufig Zeolithe, die zur Speicherung der Kohlenwasserstoffe im kalten Zustand dienen (Kaltstartfalle), so dass die Kaltstartemissionen von Kohlenwasserstoffen verringert werden.

Ein typischer DOC ist beispielsweise in EP 800 856 A2 offenbart. Er enthält mit 3 bis 4 g Pt/l Katalysatorvolumen eine hohe Edelmetallkonzentration. Um jedoch eine möglichst niedrige Light-off-Temperatur für CO und Kohlenwasserstoff zu erreichen, ist der größte Teil des Platins auf einem amorphen Al/Si-Mischoxid aufgebracht und nur ein kleiner Teil auf dem Zeolithen. Gemäß Stand der Technik ist es bisher nicht möglich gewesen, eine sehr hohe Platinkonzentration so homogen im Zeolithen zu verteilen, dass dieser auch nach einer höheren Temperaturbelastung noch eine gute Platindispersion aufweist. Die hohe Platinmenge bzw. -dispersion bewirkt eine ausreichende Stabilität, weshalb bisher im Stand der Technik die hohe Platinmenge in ein Al/Si-Mischoxid eingebracht wurde und nicht in den Zeolithen.

Die Patentanmeldung US2006/0035780 A1 offenbart einen Dieseloxidationskatalysator, umfassend einen Honigwabenkörper, der mit einer Mischung aus Ton, hitzebeständigem Oxid und einem Zeolith beschichtet wird. Das beschichtete Substrat wird anschließend mit einem Edelmetallkatalysator und einem Schwefeloxidationsunterdrückungsmittel beladen. In einer bevorzugten Ausführungsform ist der Ton ein säureaktivierter Bentonit, das hitzebeständige Oxid ist Zirkondioxid oder Titandioxid, der Zeolith ist Zeolith-Beta, Y-Zeolith, ZSM-5 oder Mordenit, der Edelmetallkatalysator ist vorzugsweise Platin und das Mittel zur Schwefeloxidationsunterdrückung ist Vanadium, Vanadiumoxid oder eine Kombination beider.

Platinhaltige Zeolithe sind im Stand der Technik bekannt. Beispielsweise werden Zeolithe mit sehr geringen Platingehalten (< 1 %) als Katalysatoren im Raffineriebereich eingesetzt, z.B. für Cyclisierungs-, Aromatisierungs-, und Crackreaktionen. Im Gegensatz zu den Bedingungen, die in einem Dieselabgas herrschen, finden die eben genannten Reaktionen unter reduktiven Bedingungen (d.h. Kohlenwasserstoffüberschuss) statt und benötigen deswegen nur sehr geringe Edelmetallgehalte.

Die Herstellung von Platin enthaltenden Zeolithen, beispielsweise durch Ioneneintausch von Platin in die Poren des Zeolithen, ist im Stand der Technik bekannt. Diese Verfahren führen jedoch nicht zu Platinkonzentrationen im Zeolithen, die für die Verwendung in einem Dieseloxidationskatalysator notwendig wäre (siehe beispielsweise J.M. Garcia-Cortes et al., Journal of Catalysis, 218 (2003), 111 bis 122; C. Jimenez et al., Applied Catalysis A: General 249 (2003), 175 bis 185 und J. Perez-Ramirez et al., Applied Catalysis B: Environmental 29 (2001), 285 bis 298).

Die Offenlegungsschrift WO 2009/138204 A2 offenbart ein Verfahren zur Herstellung einer Vorstufe eines geträgerten Platinkatalysators. Um ein Verfahren zur Herstellung einer Platinkatalysator-Vorstufe bereitzustellen, mittels welcher geträgerte Platinkatalysatoren hergestellt werden können, die eine verhältnismäßig hohe Aktivität aufweisen, wird ein Verfahren vorgeschlagen, umfassend die Schritte: a) Imprägnieren eines offenporigen Trägermaterials mit Platinsulfitsäure, b) Kalzinieren des imprägnierten Zeolithmaterials unter einem Schutzgas.

DOC-Katalysatoren mit verbesserter Stabilität werden gewöhnlich auch durch gemischte Pt-/Pd-Katalysatoren bereitgestellt. Insbesondere Pt-/Pd-Katalysatoren mit einem hohen Pt-Anteil (6:1) zeigen eine gute Stabilität gegen thermische Alterung. Nachteilig ist jedoch, dass die NO zu NO₂-Oxidation bei steigenden Pd-Gehalten schlechter wird. Außerdem sind die Pt-/Pd-Katalysatoren deutlich weniger resistent gegenüber Schwefel (siehe beispielsweise 5. Internationales Forum Abgas- und Partikelemissionen, 19. und 20. Februar 2008, Ludwigsburg, Seite 126 bis 144). Solche Katalysatoren können gewöhnlich nach einer Schwefelvergiftung nicht thermisch regeneriert werden, sondern verlieren noch weiter an Aktivität, wenn sie nach der Vergiftung thermisch beansprucht, d.h. gealtert werden.

Aufgabe der vorliegenden Erfindung war somit die Bereitstellung eines Verfahrens zur Herstellung eines Katalysators, insbesondere eines Dieseloxidationskatalysators, der eine geringe Alterungstendenz und eine hohe Aktivität aufweist.

Die Aufgabe wird gelöst durch ein Verfahren zur Herstellung eines Katalysators, wobei ein Platin enthaltender Zeolith durch folgende Schritte hergestellt wird:
a) Imprägnieren eines Zeolithen mit einem SiO₂/Al₂O₃-Modul von 5 bis 300 mit einer Platinsulfitlösung,
b) Kalzinieren des imprägnierten Zeolithen unter einer Schutzgasatmosphäre;
wobei der Platin enthaltende Zeolith als Washcoat verarbeitet und auf einen Katalysatorträgerkörper aufgebracht wird, dadurch gekennzeichnet, dass Platin nur auf eine Komponente, nämlich den Zeolithen, aufgebracht ist.

Das Kalzinieren des imprägnierten Zeolithen soll in einer Schutzgasatmosphäre erfolgen, wobei bevorzugt eine Argonatmosphäre oder eine Stickstoffatmosphäre verwendet wird. Besonders Bevorzugt ist eine Argonatmosphäre.

Das Kalzinieren des imprägnierten Zeolithen erfolgt vorzugsweise bei einer Temperatur von 600 bis 900 °C, mehr bevorzugt > 750 bis 850 °C, besonders bevorzugt > 750 bis 830°C, insbesondere bei etwa 800°C.

Durch das Kalzinieren entsteht eine PlatinVorläuferverbindung, welche, falls erforderlich, bevorzugt im Anschluss an das Kalzinieren reduziert wird. Prinzipiell kann eine Reduktion jedoch auch schon während des Kalzinierens erfolgen, wobei dann jedoch eine reduzierende Atmosphäre anstelle der Schutzgasatmosphäre eingesetzt werden müsste.

Eine Reduktion, welche im Anschluss an das Kalzinieren erfolgen kann, wird vorzugsweise aus einem Gemisch aus einem Reduktionsgas (Wasserstoff, Kohlenmonoxid, Ethen, einem Methanol, Ethanol etc.) und einem Inertgas durchgeführt. Bevorzugte Inertgase sind beispielsweise Argon, Helium, Neon und dergleichen. Das Inertgas in dem Reduktionsschritt ist als Trägergas zu verstehen, wobei Wasserstoff oder ein anderes reduktives Gas bevorzugt in einer Konzentration von 1 bis 10 Vol.-%, mehr bevorzugt 3 bis 7 Vol.-%, besonders bevorzugt etwa 5 Vol.-%, bezogen auf das Gesamtvolumen aus Reduktionsgas und Inertgas, beträgt.

Die Reduktion wird gewöhnlich solange durchgeführt, bis eine vollständige bzw. nahezu vollständige Umsetzung der Platinvorläuferverbindung erfolgt ist. Bevorzugt wird die Reduktion über einen Zeitraum von 3 bis 7 Stunden, mehr bevorzugt 4 bis 6 Stunden, besonders bevorzugt etwa 5 Stunden durchgeführt.

Die Reduktion wird bevorzugt bei erhöhten Temperaturen durchgeführt. Bevorzugt wird die Reduktion bei einer Temperatur von 200 bis 500 °C, mehr bevorzugt 250 bis 350 °C, am meisten bevorzugt etwa 300 °C durchgeführt. Für die Reduktion wird der Katalysator gewöhnlich in ein Katalysatorbett gegeben und dabei von dem Reduktionsmittel durchströmt. Ebenso kann der Katalysator mit dem Reduktionsgas überschichtet und vorteilhafterweise auf eine erhöhte Temperatur gebracht werden. Die Erhöhung der Temperatur kann beispielsweise dadurch erfolgen, dass das Katalysatorbett erwärmt wird. Ebenso ist es möglich, dass das Reduktionsgas bereits im Vorfeld erwärmt wird, beispielsweise indem die Gaszuleitung erwärmt wird, wobei dann das erwärmte Reduktionsgas über den zu reduzierenden Katalysator geleitet wird.

Das Imprägnieren des Zeolithen mit der Platinsulfitlösung kann über eine Tauchimprägnierung, Sprühimprägnierung oder Incipient-Wetness-Methode erfolgen. Bevorzugt erfolgt die Imprägnierung über eine Incipient-Wetness-Methode, obwohl gemäß Stand der Technik normalerweise bei dieser Imprägniermethode nur ein geringer Teil der Metallcluster in die Poren wandert und ein erheblicher Teil auf der äußeren Zeolithoberfläche verbleibt.

Überraschend wurde jedoch gefunden, dass sich durch Imprägnierung, z.B. Incipient-Wetness-Imprägnierung, des Zeolithen mit einem SiO₂/Al₂O₃-Modul von 5 bis 300 mit Platinsulfitsäure (PSA) und anschließender Kalzinierung unter Schutzgas bei hohen Temperaturen, wobei der Platin enthaltende Zeolith als Washcoat verarbeitet und auf einen Katalysatorträgerkörper aufgebracht wird und dass Platin nur auf eine Komponente, nämlich den Zeolithen, aufgebracht ist, ein Katalysator herstellen lässt, der auch noch nach dieser hohen Temperaturbelastung den größten Teil des Platins in den Zeolithporen aufweist. Dies kann über ein Röntgendiffraktogramm (XRD) und über CO-Adsorption (nach selektiver Vergiftung der Pt-Cluster auf der Oberfläche) im FTIR nachgewiesen werden. XRD und FTIR sind Standard-Analytikmethoden in der Chemie.

Überraschenderweise wurde auch gefunden, dass der so hergestellte Katalysator eine erhöhte Schwefelresistenz aufweist als bereits bekannte Systeme. Die katalytische Aktivität des thermisch gealterten erfindungsgemäßen Katalysators wird durch eine Schwefelvergiftung und anschließende Hochtemperaturentschwefelung nicht verändert.

Der entwickelte Katalysator zeigt zwar ein vergleichbares Alterungsverhalten bezüglich der Oxidation von Kohlenstoffmonoxid wie bestehende Pt-basierte Katalysatoren, überraschenderweise wurde aber gefunden, dass er in Bezug auf die Oxidation von NO eine deutlich bessere Stabilität aufweist.

Ein weiterer Vorteil des erfindungsgemäß hergestellten Katalysators gegenüber dem Stand der Technik ist ferner, dass das Edelmetall nur auf eine Komponente, den Zeolith, aufgebracht ist, und nicht wie bei anderen Katalysatoren auf einem Gemisch von Zeolith und zusätzlichen oxidischen Trägern.

Dadurch können Herstellungsschritte und somit auch Kosten eingespart werden.

Durch den erhöhten Zeolithanteil wird zudem die Speicherkapazität für Kohlenwasserstoffe deutlich erhöht (siehe beispielsweise EP 691 883 B1, US 5,804,155 und EP 830 301). Die Speicherkapazität ist von großer Bedeutung, wenn der Katalysator die nötige Betriebstemperatur noch nicht erreicht hat und die entstehenden Abgase noch nicht verbrennen kann.

Unter dem Begriff "Zeolith" wird im Rahmen der vorliegenden Erfindung gemäß der Definition der International Mineralical Association (D.S. Coombs et al., Canadian Mineralogist, 35, 1979, 1571) eine kristalline Substanz aus der Gruppe der Aluminiumsilikate mit einer Raumnetzstruktur der allgemeinen Formel

M_{x/n}[(AlO₂)ₓ (SiO₂)_{y}]x(H₂O)_{z}

verstanden, die aus SiO_{4/}AlO₄-Tetraeder bestehen, die durch gemeinsame Sauerstoffatome zu einem regelmäßigen dreidimensionalen Netzwerk verknüpft sind.

Das Verhältnis von Si/Al=y/x beträgt immer > 1 gemäß der sog. "Löwenstein-Regel", die das benachbarte Auftreten zweier benachbarter negativ geladener AlO₄-Tetraeder verbietet. Dabei stehen bei einem geringen Si/Al-Verhältnis zwar mehr Austauschplätze für Metall zur Verfügung, der Zeolith wird jedoch zunehmend thermisch instabiler.

Die Zeolithstruktur enthält Hohlräume, Kanäle, die für jeden Zeolithen charakteristisch sind. Die Zeolithe werden gemäß ihrer Topologie in verschiedene Strukturen eingeteilt. Das Zeolithgerüst enthält offene Hohlräume in Form von Kanälen und Käfigen, die normalerweise mit Wassermolekülen und zusätzlichen Gerüstkationen besetzt sind, die ausgetauscht werden können. Auf ein Aluminiumatom kommt eine überschüssige negative Ladung, die durch diese Kationen kompensiert wird. Das Innere des Porensystems stellt die katalytisch aktive Oberfläche dar. Je mehr Aluminium und je weniger Silizium ein Zeolith enthält, desto dichter ist die negative Ladung in seinem Gitter und desto polarer seine innere Oberfläche. Die Porengröße und Struktur wird neben den Parametern bei der Herstellung, d.h. Verwendung bzw. Art von Templaten, pH, Druck, Temperatur, Anwesenheit von Impfkristallen, durch das Si/Al-Verhältnis (Modul) bestimmt, das den größten Teil des katalytischen Charakters eines Zeolithen ausmacht.

Vorzugsweise enthält der erfindungsgemäße Zeolith mindestens 2 Gew.-% Platin, vorzugsweise mindestens 3 Gew.-%, am meisten bevorzugt 3,5 oder mehr Gew.- % Platin, wobei sich mindestens 90 % des Platins in den Poren des Zeolithen befinden, mehr bevorzugt mindestens 95 %, insbesondere bevorzugt mindestens 99 %.

Bevorzugt ist der Zeolith ausgewählt aus den Gruppen bestehend aus den Typen AEL, BEA, CHA, EUO, FAU, FER, KFI, LTA, LTL, MAZ, MOR, MEL, MTW, LEV, OFF, TON, und MFI. Besonders bevorzugt ist die BEA-Struktur.

Der Zeolith weist ein SiO₂ /Al₂O₃ Modul von 5 bis 300, bevorzugt von 10 bis 200, mehr bevorzugt von 15 bis 100, auf.

Der Zeolith in dem erfindungsgemäßen Katalysator zeichnet sich durch eine Pt-C=O Streckschwingung zwischen 2070 und 2110 cm⁻¹, vorzugsweise bei etwa 2080 bis 2095 cm⁻¹ aus. Die Streckschwingung ist selbst nach einer Vergiftung mit Adamantancarbonitril vorhanden. Adamantancarbonitril ist ein sterisch anspruchsvolles Molekül, das auf Grund seiner Größe nicht in das Porensystem des Zeolithen eindringen kann. Durch die Adsorption von Adamantancarbonitril werden daher nur Pt-Cluster auf der äußeren Oberfläche des vergiftet. Wird im Anschluss an diese Vergiftung CO adsorbiert, kann dieses nur noch an die nicht vergifteten Pt-Cluster im inneren des Zeolithen binden. Das Vorhanden sein der Pt-C=O Streckschwingung nach der Vergiftung mit Adamantancarbonitril beweist, dass das Pt in den Poren des Zeolithen sitzt. Die verbleibende Intensität nach einer Vergiftung ist etwa 2- bis 4-fach höher als bei einem Vergleichskatalysator.

Der Zeolith in dem erfindungsgemäßen Katalysator ist ferner im Röntgendiffraktogramm (XRD) frei von Pt-Reflexen. Dies zeigt ebenfalls, dass das Platin in den Poren des Zeolithen sitzt.

Ein weiterer Gegenstand der Erfindung ist die Verwendung des erfindungsgemäßen Katalysators als Oxidationskatalysator und Kohlenwasserstoffspeicher. Zeolithe sind als Kohlenwasserstoffspeicher bekannt. In Verbindung mit der hohen Platindispersion in den Poren des Zeolithen eignet er sich jedoch auch hervorragend als Oxidationskatalysator mit entsprechender kumulierter Kohlenwasserstoffspeicherfunktion. Dadurch, dass Platin lediglich auf einen Zeolithen aufgebracht wird und nicht, wie im Stand der Technik bekannt, auf andere Metalloxide, ergibt sich ein einfaches Katalysatorsystem, das kostengünstig hergestellt werden kann.

Der Zeolith kann vorteilhaft zu einem Washcoat verarbeitet werden und entsprechend auf einen Katalysatorträgerkörper aufgebracht werden. Wie ein solcher Washcoat hergestellt werden kann, ist dem Fachmann bekannt. Die notwendigen Beschichtungstechniken zur Beschichtung eines Katalysatorträgerkörpers sind dem Fachmann ebenfalls bekannt.

So wird z.B. der imprägnierte und getrocknete Zeolith zu einer wässrigen Beschichtungsdispersion verarbeitet. Dieser Dispersion kann ein Binder, z.B. Silikasol, zugegeben werden. Die Viskosität der Dispersion kann durch die eigenen Zusatzstoffe eingestellt werden, so dass es möglich wird, die benötigte Beschichtungsmenge in einem einzigen Arbeitsgang auf die Wandungen der Strömungskanäle aufzubringen. Ist dies nicht möglich, so kann die Beschichtung mehrfach wiederholt werden, wobei die frisch aufgebrachte Beschichtung jeweils durch eine Zwischentrocknung fixiert und bei Bedarf kalziniert wird.

Für die Abgasreinigung von Dieselmotoren sind Beschichtungsmengen von 50 bis 500 g/l, bevorzugt 250 bis 350 g/l Volumen des Katalysatorträgerkörpers vorteilhaft.
Als Katalysatorträger kann ein metallischer oder keramischer Monolith, ein Vlies- oder ein Metallschaum verwendet werden. Auch andere im Stand der Technik bekannte Katalysatorformkörper bzw. Katalysatorträgerkörper sind erfindungsgemäß geeignet. Besonders bevorzugt ist ein metallischer oder keramischer Monolith, der eine Vielzahl von parallelen Durchtrittsöffnungen aufweist, welche mit der Washcoatbeschichtung versehen werden. Vorzugsweise weist der Trägerkörper Durchtrittsöffnungen mit rundem, dreieckigem, viereckigem oder polygonalem Querschnitt auf. Besonders bevorzugt ist der Träger als monolithischer Honigwabenkörper ausgebildet.

Metallische Wabenkörper sind häufig aus Metallblechen oder Metallfolien gebildet. Dabei werden die Wabenkörper beispielsweise durch abwechselnde Anordnung von Lagen strukturierter Bleche bzw. Folien hergestellt. Vorzugsweise bestehen diese Anordnungen aus einer Lage eines glatten Blechs im Wechsel mit einem gewellten Blech, wobei die Wellung beispielsweise sinusförmig, trapezförmig, omegaförmig oder zickzackförmig ausgebildet sein kann. Entsprechende metallische Wabenkörper und Verfahren zu ihrer Herstellung werden beispielsweise in der EP 0 049 489 A1 oder der DE 28 56 030 A1 beschrieben.

Im Bereich der Katalysatorträgerkörper haben metallische Wabenkörper den Vorteil, dass sie sich schneller erwärmen und damit in der Regel Katalysatorträgerkörper auf der Basis von metallischen Substraten ein besseres Ansprechverhalten bei Kaltstartbedingungen zeigen.

Vorzugsweise weist der Wabenkörper eine Zelldichte von 30 bis 1500 cpsi, besonders bevorzugt von 200 bis 600 cpsi, insbesondere etwa 400 cpsi, auf.

Der Katalysatorträgerkörper, auf den der Zeolith aufgebracht sein kann, kann aus einem beliebigen Metall oder einer Metalllegierung gebildet und z. B. durch Extrusion oder durch Aufwickeln oder Stapeln oder Falten von Metallfolien hergestellt sein. Bekannt im Bereich der Abgasreinigung sind temperaturbeständige Legierungen mit den Hauptbestandteilen Eisen, Chrom und Aluminium. Bevorzugt für den erfindungsgemäßen Katalysator sind frei durchströmbare monolithische Katalysatorträgerkörper mit oder ohne innere Anströmkanten zur Abgasverwirbelung oder Metallschäume, die eine große innere Oberfläche aufweisen und an denen der erfindungsgemäße Katalysator sehr gut haftet. Jedoch lassen sich auch Katalysatorträgerkörper mit Schlitzen, Lochungen, Perforationen und Prägungen in der Metallfolie einsetzen.

In gleicher Weise können Katalysatorträgerkörper aus keramischem Material eingesetzt werden. Bevorzugt handelt es sich bei dem keramischen Material um ein inertes, niedrig oberflächiges Material wie Cordierit, Mullit, AluminiumTitanat oder α-Aluminiumoxid. Jedoch kann der verwendete Katalysatorträger auch aus hochoberflächigem Trägermaterial wie γ-Aluminiumoxid bestehen.

Ebenso kann ein Metallschaum, beispielsweise ein metallisches offenporiges Schaummaterial, als Katalysatorträgerkörper eingesetzt werden. Im Rahmen der vorliegenden Erfindung soll unter dem Begriff "metallisches offenporiges Schaummaterial" ein Schaummaterial aus einem beliebigen Metall oder aus einer beliebigen Legierung verstanden werden, das gegebenenfalls auch noch Zuschlagsstoffe enthalten kann und das eine Vielzahl von Poren aufweist, die miteinander leitungsverbunden sind, so dass beispielsweise durch das Schaummaterial ein Gas hindurch geleitet werden kann.

Metallische offenporige Schaummaterialien haben durch die Poren und Hohlräume bedingt eine sehr geringe Dichte, weisen jedoch eine beträchtliche Steifigkeit und Festigkeit auf. Die Herstellung von Metallschäumen erfolgt beispielsweise mittels eines Metallpulvers und eines Metallhydrids. Beide Pulver werden in der Regel miteinander vermischt und dann durch Heißpressen oder Strangpressen zu einem Formmaterial verdichtet. Das Formmaterial wird dann auf eine Temperatur oberhalb des Schmelzpunktes der Metalle erhitzt. Dabei setzt das Metallhydrid Wasserstoffgas frei und schäumt das Gemenge auf.

Es gibt jedoch auch noch andere Möglichkeiten, Metallschäume herzustellen, beispielsweise durch Einblasen von Gas in eine Metallschmelze, die zuvor durch Zugabe fester Bestandteile schäumbar gemacht wurde. Für Aluminiumlegierungen beispielsweise werden zur Stabilisierung 10 bis 20 Vol.-% Siliziumcarbid oder Aluminiumoxid zugegeben. Darüber hinaus lassen sich offenporige metallische Schaumstrukturen mit einem Porendurchmesser von 10 ppi bis circa 50 ppi durch spezielle Feingusstechniken herstellen.

Der Träger kann prinzipiell auch extrudiert und spritzgegossen werden. Auch hier sind metallische und keramische Materialien möglich, wobei im Falle der keramischen Materialien beispielsweise Formhilfsmittel zugegeben werden und beispielsweise auch Bindemittel und sonstige Zusatzstoffe. Extrudierte Träger können beliebige Geometrien einnehmen, vorzugsweise die oben genannten.

Die Erfindung soll nun anhand einiger nicht als beschränkend auf den Umfang der Erfindung zu verstehenden Ausführungsbeispiele näher erläutert werden.

### Ausführungsbeispiele:

### Beispiel 1

Der erfindungsgemäße Katalysator wird nach folgender Vorschrift hergestellt:

Zuerst wurde die Wasseraufnahme eines getrockneten Zeolithen bestimmt (H-BEA-35:kommerzielles Produkt der Süd-Chemie AG). Sie betrug 92,3 %.

24,1 g einer Platinsulfitlösung (10,17 Gew.-% Pt-Gehalt) wurden mit destilliertem Wasser auf 62,3 g aufgefüllt. Mit dieser Lösung wurden in einem Mörser 67,55 g des getrockneten Zeolithen imprägniert. Die Platinkonzentration betrug 3,5 Gew.-%. Das feuchte Pulver wurde bei 120 °C getrocknet und anschließend 5 Stunden bei 800 °C unter Schutzgas (V = 2 l/min) kalziniert und mit 5 % H₂ in N₂ für 5 h bei 300 °C reduziert.

70 g des Pulvers wurde mit Hilfe eines Ultra-Turrax-Rührers in 230 ml Wasser suspendiert. Die Suspension wurde mit einer Planetenkugelmühle (Retsch PM 100) mit 10 mm Kugeln aus Yttrium-stabilisierten Zr-Oxid auf eine Partikelgröße von d₅₀ ∼ 2 µm gemahlen. Mit diesem Washcoat wurde eine Coderieritwabe (400 cpsi) beschichtet und kalziniert, so dass am Ende 3,5 g Pt/L-Wabenvolumen auf der Wabe enthalten waren.

### Beispiel 2

Um den Einfluss der Reduktion zu untersuchen, wurde eine zweite Wabe mit einem nicht reduzierten Katalysator (sonst analog zu Bsp. 1) beschichtet.

### Vergleichsbeispiel 1:

Als Vergleich wurde die gleiche Synthese mit Ethanolammoniumhexahydroxoplatinat-Lösung (13,59 Gew.-% Pt-Gehalt) als Pt-Quelle durchgeführt. Die Pt-Konzentration betrug ebenfalls 3,5 Gew.-%.

### Vergleichsbeispiel 2:

In Anlehnung an DE 10 2007 057 305 und EP 800 856 B1 wurde ein DOC-Katalysator nach folgender Vorschrift hergestellt:

Es wurde zuerst die Wasseraufnahme eines Mischoxides aus Aluminiumoxid und Siliziumoxid (Siralox 5/140, 5 % Si, von Condea) bestimmt. Sie betrug 53,86 %. 110,4 g einer Lösung von Ethanolammoniumhexahydroxoplatinat (13,59 % Pt-Gehalt) wurde (mit H₂O dest.) auf 161,6 ml aufgefüllt. Mit dieser Lösung wurden in einem Planetenmischer 300 g des Siraloxpulvers imprägniert. Das feuchte Pulver wurde im Ofen 3 h bei 80 °C getrocknet und dann 3 h bei 550 °C kalziniert.

140 g des Pulvers wurde mit Hilfe eines Ultra-Turrax-Rührers in 700 ml Wasser suspendiert. Die Suspension wird mit einer Perlenmühle (Dynomil Fa. WAB) mit 1 - 1,2 mm Perlen aus Zr/Ce-Oxid auf eine Partikelgröße d₅₀ ∼ 3 µm gemahlen. Zu dieser fein gemahlenen Dispersion von Pt/Siralox wurde 140 g eines mit Eisen ausgetauschten β-Zeolithen (3 % Fe₂O₃, β-35-Zeolith) gegeben und die Suspension auf 1400 ml aufgefüllt, so dass ein Beschichtungswashcoat von 20 % Feststoffgehalt entstand. Mit diesem Washcoat wurde eine Cordieritwabe (400 cpsi) beschichtet und kalziniert, so dass am Ende 3,5 g Pt/l-Wabenvolumen auf der Wabe enthalten waren.

### Vergleichsbeispiel 3:

Als Vergleich der katalytischen Aktivität und der Alterung wurde zusätzlich ein handelsüblicher DOC-Katalysator eines Daimler OM646-Motors eingesetzt.

### Vergleichsbeispiel 4:

### Pt/Pd- (4:1)-Katalysator:

Es wurde zuerst die Wasseraufnahme eines Mischoxides aus Aluminiumoxid und Siliziumoxid (Siralox 5/140 Typ C mit sehr großen Poren und 5 % Si von Condea) bestimmt. Sie betrug 151 %. 67,39 g einer Lösung von Ethanolammoniumhexahydroxoplatinat (13,85 % Pt-Gehalt) wurde mit 58 ml destilliertem Wasser aufgefüllt. Mit dieser Lösung wurde in einem Planetenmischer 186 g des Siraloxpulvers in einem ersten Schritt imprägniert. Dann wurde 17,34 g einer Palladiumnitratlösung mit 58 ml Wasser verdünnt und im nächsten Schritt weiter als Imprägnierlösung zu dem feuchten Pulver im Planetenmischer zugetropft. Das feuchte Pulver wurde im Ofen 3 h bei 80 °C getrocknet und dann 3 h bei 550 °C kalziniert. Das Pulver enthielt 7 % Gesamtedelmetallgehalt.

140 g des Pulvers wurde mit Hilfe eines Ultra-Turrax-Rührers in 700 ml Wasser suspendiert. Die Suspension wurde mit einer Perlenmühle (Dynomill Fa. WAB) mit 1 - 1,2 mm Perlen aus Zr/Ce-Oxid auf eine Partikelgröße d₅₀ ∼ 3 µm gemahlen. Mit diesem Washcoat wurde eine Cordieritwabe (400 cpsi) beschichtet und kalziniert, so dass am Ende 3,5 g Edelmetall/L-Wabenvolumen auf der Wabe enthalten waren.

### Vergleichsbeispiel 5:

### Pt-Katalysator ohne Zeolith:

Es wurde zuerst die Wasseraufnahme eines Mischoxids aus Aluminiumoxid und Siliziumoxid (Siralox 5/140 Typ C mit sehr großen Poren und 5 % Si von Condea) bestimmt. Sie betrug 151 %. 73,6 einer Lösung von Ethanolammoniumhexahydroxoplatinat (13,59 % Pt-Gehalt) wurde mit destilliertem Wasser auf 181 ml aufgefüllt. Mit dieser Lösung wurde in einem Planetenmischer 200 g des Siraloxpulvers imprägniert. Das feuchte Pulver wurde im Ofen 3 h bei 80 °C getrocknet und dann 3 h bei 550 °C kalziniert.

100 g des Pulvers wurde mit Hilfe eines Ultra-Utrax-Rührers in 200 ml Wasser suspendiert. Die Suspension wurde mit einer Planetenkugelmühle (Ra. Retsch) mit 10 mm Perlen aus Zr-Oxid auf eine Partikelgröße von d₅₀ ∼ 3 µm gemahlen. Zum Entleeren des Mahlbehälters wurden noch 200 g Wasser zugegeben. Mit diesem Washcoat wurde eine Cordieritwabe (400 cpsi) beschichtet und kalziniert, so dass am Ende 3,5 g Pt/l-Wabenvolumen auf der Wabe enthalten waren.

### Beispiel 6:

### Vergleichstest der Katalysatoren:

Die in den Beispielen 1 und 2 und den Vergleichsbeispielen hegestellten Katalysatorwaben wurden in einem Reaktor unter folgenden Bedingungen auf die Oxidation von CO, Propen und NO getestet:

### Raumgeschwindigkeit: 70.000 h⁻¹

| | |
|---|---|
| CO: | 500 ppm |
| NO: | 500 ppm |
| Propen: | 500 ppm |
| Sauerstoff: | 5 % |
| Wasserdampf: | 10 % |
| CO₂: | 70 -90 ppm |
| Stickstoff: | Rest |

Die Katalysatorwabe wurde mit einer Keramikfasermatte in ein Quarzglasrohr eingebaut. Der Gasstrom wurde vor dem Katalysator elektrisch aufgeheizt. Für den Test wurde der Katalysator erst 30 min unter diesen Gasbedingungen bei 390 °C betrieben und dann in Schritten von 20 °C abgekühlt. Dabei wurde jede Temperatur 8 min gehalten und die Produktzusammensetzung zwischen 7 und 8 min bestimmt. Unterhalb von 250 °C erfolgte die Abkühlung in 5 °C-Schritten um speziell die CO-Light-Off-Temperatur (50 % CO-Umsatz) genauer bestimmen zu können.

Nach diesem Test wurde der Katalysator mit Luft mit 10 % Wasserdampf mit einer Raumgeschwindigkeit von 5000 h⁻¹ durchströmt und unter diesen Gasbedingungen auf 750 °C (gemessen im Monolith) innerhalb von 2 h aufgeheizt. Unter diesen Bedingungen wurde der Katalysator 10 h gealtert. Dann wurde die oben beschriebene Messung wiederholt.

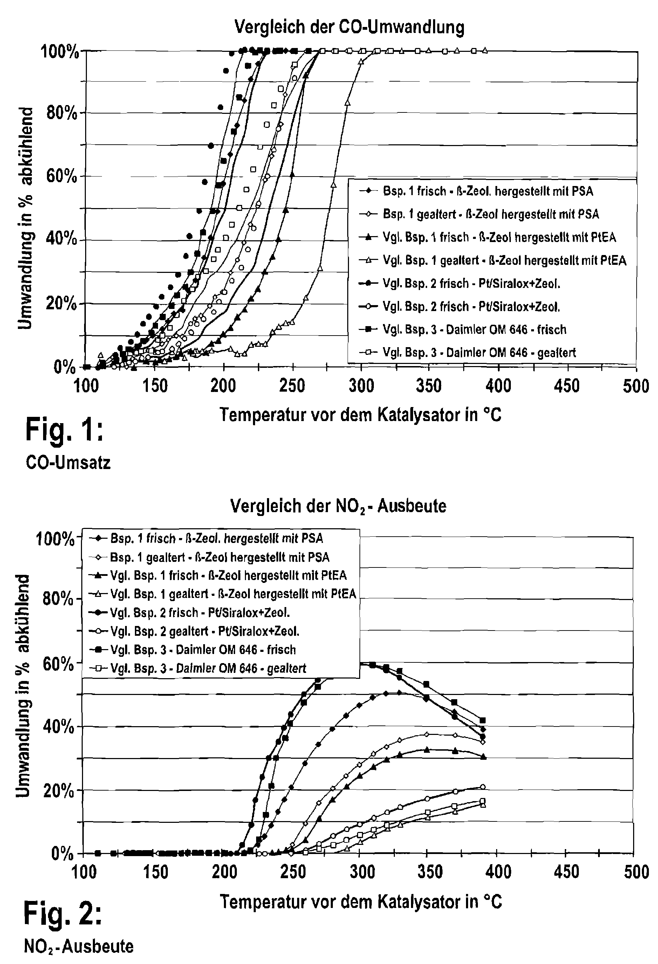

Figur 1 zeigt die den CO-Umsatz der erfindungsgemäßen und der Vergleichskatalysatoren. Tab. 1 zeigt die aus Figur 1 entnommenen Light-Off-Temperaturen (50 % Umsatz an CO).

**Tabelle 1: CO-Light-Off-Temperaturen (50 % Umsatz)**

| Beispiel | CO-LOT frisch [°C] | CO-LOT gealtert [°C] |
|---|---|---|
| Bsp. 1 | 196 | 225 |
| Bsp. 2 | 189 | 224 |
| Vgl. Bsp. 1 | 245 | 278 |
| Vgl. Bsp. 2 | 191 | 233 |
| Vgl. Bsp. 3 | 200 | 220 |

Es ist klar zu erkennen, dass der reine Zeolith-Katalysator, der Pt auch an der Oberfläche in größeren Clustern aufweist, was durch die Herstellung mit PtEA-Imprägnierung unvermeidlich war (Vergleichsbeispiel 1), deutlich schlechter ist, als der erfindungsgemäße Katalysator.

Es ist auch zu erkennen, dass der erfindungsgemäße Katalysator hinsichtlich der CO-Light-Off-Temperaturen mit handelsüblichen (Vgl. Bsp. 3) und reproduzierten State-of the Art DOC-Katalysatoren (Vgl. Bsp. 2), die auf amorphen Al/Si-Mischoxiden als Platinträger beruhen, sowohl im frischen Zustand, als auch nach Alterung vergleichbar ist. Außerdem ist aus dem Vergleich aus Beispiel 1 und 2 zu erkennen, dass eine Reduktion des Katalysators vor der Reaktion hier keine Rolle spielt. Durch die Testbedingungen von 30 min unter einer oxidierenden Gasmischung bei 390 °C werden derartige Effekte für die erfindungsgemäßen Katalysatoren aufgehoben. Es können also Katalysatoren mit Pt(0) oder oxidischer Vorstufe eingesetzt werden.

Figur 2 und Tab. 2 zeigen die NO₂-Ausbeute dieser Katalysatoren. Eine hohe NO₂-Ausbeute ist erwünscht für die passive Regeneration eines DPF, welcher einem DOC nachgeschaltet ist und im Falle einer SCR-Stufe zur Stickoxidreduktion nach diesem DOC.

**Tabelle 2: Maximale NOₐ-Ausbeute**

| Beispiel | Max. NO₂-Ausbeute [%] frisch | Max. NO₂-Ausbeute [%] gealtert |
|---|---|---|
| Bsp. 1 | 50 | 37 |
| Bsp. 2 | 52 | 33 |
| Vgl. Bsp. 1 | 32 | 15 |
| Vgl. Bsp. 2 | 60 | 21 |
| Vgl. Bsp. 3 | 59 | 16 |

Es ist klar zu erkennen, dass nur der erfindungsgemäße Katalysator nach Alterung mit 37 und 33 % NO₂-Ausbeute noch eine relativ hohe Aktivität für die Oxidation von NO zu NO₂ aufweist.

### Beispiel 7:

### Vergleichstest unter Schwefelalterung:

Da bekannt ist, dass Pt/Pd-Katalysatoren alterungsstabiler, aber dafür schwefelempfindlicher sind als reine Platinkatalysatoren, wurde nach der Alterung noch ein Test mit Schwefelvergiftung nach Alterung durchgeführt.

Zu diesem Zweck wurde erst, wie in Beispiel 6 beschrieben, ein Aktivitätstest von 390 °C abwärts durchgeführt, dann die Alterung, wie in Beispiel 6 beschrieben und dann wieder ein Test nach der thermischen Alterung. Danach wurde mit einer Raumgeschwindigkeit von 5000 h⁻¹ ein Gasgemisch aus 20 ppm SO₂ in Luft bei 250 °C für 2 h über den Katalysator geleitet. Anschließend wurde wieder eine Aktivitätsmessung, ausgehend von 390 °C abkühlend, durchgeführt. Dann wurde der Katalysator unter Luft mit 10 % Wasserdampf bei einer Raumgeschwindigkeit von 5000 h⁻¹ wieder entschwefelt, indem über einen Zeitraum von 1 h von 150 °C auf 750 °C aufgeheizt und dann 15 min bei 750 °C gehalten wurde. Nach dieser Hochtemperaturentschwefelung wurde erneut ein Aktivitätstest ausgehend von 390 °C abkühlend durchgeführt, wie in Beispiel 6 beschrieben.

Tab. 3 zeigt die CO-Light-Off-Temperaturen für die verschiedenen Katalysatoren:

**Tabelle 3: CO-Light-Off-Temperaturen nach SO₂-Alterung**

| **Beispiel** | **Zusammensetzung** | **CO-Light-Off-Temperatur [°C]** | | | |
|---|---|---|---|---|---|
| | | **frisch** | **750 °C gealtert** | **250 °C 2h +SO₂** | **750 °C 15 min entschwefelt** |
| | | | | | |
| Bsp. 1 | Pt/β-Zeolith gemäß Erfindung | 196 | 225 | 237 | 218 |
| Vgl. Bsp. 4 | Pt/Pd (Siralox) | 180 | 165 | 178 | 166 |
| Vgl. Bsp. 5 | Pt/Siralox | 198 | 225 | 230 | 236 |

Es ist klar zu erkennen, dass der erfindungsgemäße Katalysator sich hier sehr ähnlich dem reinen Platinkatalysator gemäß Stand der Technik auf amorphem Al/Si-Oxid verhält (Vgl. Bsp. 5). Der Pt/Pd-Katalysator (Vgl. Bsp. 4) ist wesentlich thermostabiler. Die optimale Pt/Pd-Legierung war durch Kalzinieren bei 550 °C bei der Herstellung noch nicht ausgebildet, so dass der Katalysator bei der 750 °C-Alterung sogar noch besser wurde. Es ist auch zu sehen, dass die Schwefelvergiftung sowohl für den Pt/Pd-Katalysator, als auch für den erfindungsgemäßen Katalysator für die CO-Oxidation annähernd reversibel ist. Der große Vorteil des erfindungsgemäßen Pt-Katalysators zeigt sich aber, wenn man die NO-Oxidation betrachtet Die maximalen Ausbeuten an NO₂ sind in Tabelle 4 dargestellt.

**Tabelle 4: NO-Oxidation nach Schwefelalterung**

| **Beispiel** | **Zusammensetzung** | **Maximale NO₂-Ausbeute in [%]** | | | |
|---|---|---|---|---|---|
| | | **frisch** | **750 °C gealtert** | **250 °C 2 h +SO₂** | **750 °C 15 min entschwefelt** |
| | | | | | |
| Bsp. 1 | Pt/β-Zeolith nach Erfindung | 50 | 37 | 39 | 37 |
| Vgl. Bsp. 4 | Pt/Pd (4:1) | 51 | 43 | 38 | 28 |
| Vgl. Bsp. 4 | Pt/Siralox | 56 | 21 | 22 | 22 |

Es ist klar zu erkennen, dass der erfindungsgemäße Katalysator eine geringere thermische Alterung zeigt als der reine Platinkatalysator (Vgl. Bsp. 5), aber nach dieser thermischen Alterung unabhängig vom Schwefel unverändert bleibt. der Pt/Pd-Katalysator (Vgl. Bsp. 4) ist zwar auch thermisch stabiler, aber auch nach der drastischen thermischen Alterung wird er noch durch Schwefel deaktiviert. Gerade wenn der Katalysator nach einer Beladung mit Schwefel hoch erhitzt wird, wird er bei dem Desulfatisierungsvorgang für die NO-Oxidation stark deaktiviert. Dass in der Tat eine Desulfatisierungsreaktion stattgefunden hat, ist daran zu sehen, dass die CO-Oxidation wieder besser wurde (Tab. 3, Vgl. Bsp. 4). Bei diesem Desulfatisierungsprozess wurde aber der Pt/Pd-Katalysator nochmals erheblich für die NO-Oxidation deaktiviert (max. NO₂-Ausbeute 28 %). Diese Deaktivierung ist bei dem erfindungsgemäßen Katalysator nicht zu beobachten dieser Prozess ist aber in der Praxis sehr relevant. Wenn ein DOC-Katalysator in einem System mit aktiv regenerierten DPF häufig durch Kohlenwasserstoffverbrennung hohe Temperaturen zur DPF-Regeneration erzeugen muss, ist diese Deaktivierung sehr entscheidend. In den Normalbetriebsphasen des Katalysators zwischen den Regenerationen arbeitet der Katalysator immer in SO₂-haltigem Abgas bei tieferer Temperatur (0 - 500 °C). Er wird hier mit SO₂ beladen. Jede aktive Regenerierung bedeutet ein Temperaturplus mit sehr hoher Temperatur und führt zu der hier beschriebenen Deaktivierung der Pt/Pd-Katalysatoren nach dem Stand der Technik, aber nicht zu einer Deaktivierung des erfindungsgemäßen Katalysators.

### Beispiel 8:

### Bestimmung der Pt-Verteilung

Um die Pt-Verteilung auf dem Zeolithen zu bestimmen, wurde eine IR-Spektroskopische Methode entwickelt. Die Methode beruht auf dem Vergleich der Pt-C=O Streckschwingung vor und nach der Adsorption von 1-Adamantancarbonitril. bei 1-Adamantancarbonitril handelt es sich um ein sterisch anspruchsvolles Molekül, das auf Grund seiner Größe nicht in das Porensystem des Zeolithen eindringen kann und deshalb selektiv an die Pt-Cluster auf der äußeren Oberfläche bindet. Vergleicht man die Menge an Kohlenstoffmonoxid, die vor und nach der Vergiftung an die Pt-Cluster bindet, kann die Verteilung des Pt bestimmt werden.

### Durchführung der Messung:

Aus dem Pt-Zeolith Pulver wurde ein Pressling mit ca. 20 mg hergestellt. Dieser Pressling wurde vor der Messung bei 400 °C im Hochvakuum (~10⁻⁷ mbar) über Nacht getrocknet.

Vor der Messung des Referenzspektrums wurden 20 mbar Kohlenstoffmonoxid auf der Probe adsorbiert. Dann wurde die erste Messung der gesamten adsorbierten CO-Menge durchgeführt. (Integral des CO-Peaks). Vor der Vergiftung wurde die Probe erneut bei 400 °C thermisch behandelt um das Kohlenstoffmonoxid zu desorbieren und somit die Vergiftung mit 1-Adamantancarbonitril zu ermöglichen. Für die Vergiftung wurden 2,5 mbar des Nitrils absorbiert und danach erneut 20 mbar CO zudosiert. Nach ca. 10 min wurde das Vergleichsspektrum gemessen.

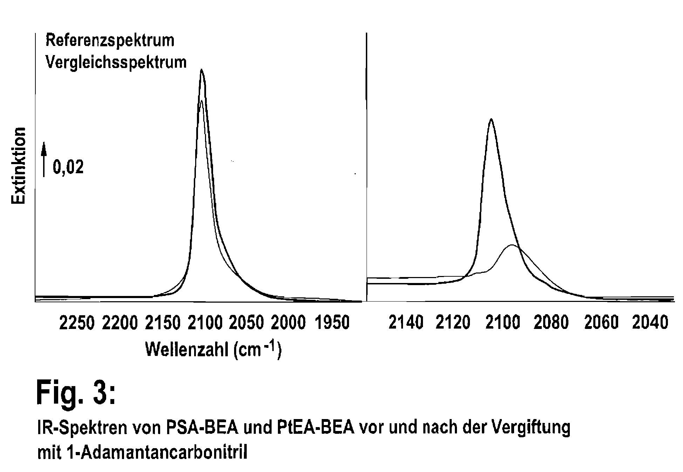

Figur 3 zeigt die IR-Spektren von PSA-BEA und PtEA-Bea vor und nach der Vergiftung mit 1-Adamantancarbonitril

Das linke Spektrum zeigt den erfindungsgemäßen Katalysator, das rechte den Katalysator gemäß Vergleichsbeispiel 1, hergestellt mit Ethanolammonium-hexahydroxoplatinat. Der erfindungsgemäße Katalysator adsorbiert sowohl im ursprünglichen als auch im vergifteten Zustand annähernd die gleiche Menge Kohlenstoffmonoxid. Das bedeutet, dass das Platin für das Nitril nicht zugänglich ist und sich folglich im Inneren des Zeolithen (in den Poren) befindet. Im Gegensatz dazu, adsorbiert der mit Adamantannitril vergiftete Katalysator gemäß Vergleichsbeispiel 1 deutlich weniger CO als der unvergiftete Katalysator. Das bedeutet, dass die Pt-Verteilung auf beiden Zeolithen unterschiedlich ist und mit der Aktivität als auch der Stabilität der beiden Katalysatoren korreliert. Es ist also eindeutig von Vorteil, das Platin vollständig in das Innere Porensystem des Zeolithen einzubringen.

Die unterschiedliche Pt-Verteilung wird zusätzlich durch XRD-Messungen bestätigt. Das Spektrum des erfindungsgemäßen Katalysators zeigt keine Pt-Reflexe, wohingegen das Spektrum des Katalysators gemäß Vergleichsbeispiel 1 deutliche Reflexe zeigt.

## Patentansprüche

1. Verfahren zur Herstellung eines Katalysators, wobei ein Platin enthaltender Zeolith durch folgende Schritte hergestellt wird:
a) Imprägnieren eines Zeolithen mit einem SiO₂/Al₂O₃-Modul von 5 bis 300 mit einer Platinsulfitlösung,
b) Kalzinieren des imprägnierten Zeolithen unter einer Schutzgasatmosphäre;
wobei der Platin enthaltende Zeolith als Washcoat verarbeitet und auf einen Katalysatorträgerkörper aufgebracht wird, **dadurch gekennzeichnet, dass** Platin, nur auf eine Komponente, nämlich den Zeolithen, aufgebracht ist.

2. Verfahren zur Herstellung eines Katalysators gemäß Anspruch 1, wobei das Kalzinieren in einer Argon-, Helium-, Neon- oder Stickstoffatmosphäre erfolgt.

3. Verfahren zur Herstellung eines Katalysators gemäß Anspruch 1 oder 2, wobei das Kalzinieren bei einer Temperatur von 600 bis 900 °C erfolgt.

4. Verfahren zur Herstellung eines Katalysators gemäß einem der Ansprüche 1 bis 3, wobei im Anschluss an das Kalzinieren eine Reduktion erfolgt.

5. Verfahren zur Herstellung eines Katalysators nach Anspruch 4, wobei die Reduktion mit einem Gemisch aus Reduktionsgas und einem Inertgas erfolgt.

6. Verfahren zur Herstellung eines Katalysators gemäß einem der Ansprüche 4 oder 5, wobei die Reduktion über einen Zeitraum von 3 bis 7 Stunden erfolgt.

7. Verfahren zur Herstellung eines Katalysators gemäß einem der Ansprüche 4 bis 6, wobei die Reduktion bei einer Temperatur von 200 bis 500 °C erfolgt.

8. Verfahren zur Herstellung eines Katalysators nach einem der Ansprüche 1 bis 7, wobei der verwendete Zeolith ausgewählt ist aus der Gruppe bestehend aus den Typen AEL, BEA, CHA, EUO, FAU, FER, KFI, LTA, LTL, MAZ, MOR, MEL, MTW, LEV, OFF, TON und MFI.

9. Verfahren zur Herstellung eines Katalysators nach einem der Ansprüche 1 bis 8, wobei der Katalysatorträgerkörper ein metallischer oder keramischer Monolith, ein Vlies- oder Metallschaum ist.

10. Katalysator, hergestellt nach einem Verfahren gemäß einem der Ansprüche 1 bis 9.

11. Katalysator gemäß Anspruch 10, **dadurch gekennzeichnet, dass** der Platin enthaltende Zeolith mindestens 2 Gew.-% Platin enthält, wobei sich mindestens 90 % des Platins in den Poren des Platin enthaltenden Zeolithen befinden.

12. Katalysator gemäß Anspruch 10 oder 11, **dadurch gekennzeichnet, dass** sich mindestens 95 % des Platins in den Poren des Platin enthaltenden Zeolithen befindet.

13. Katalysator gemäß einem der Ansprüche 10 bis 12, **dadurch gekennzeichnet, dass** der Platin enthaltende Zeolith mindestens 3 Gew.-% Platin enthält.

14. Katalysator gemäß einem der Ansprüche 10 bis 13, wobei der Zeolith ausgewählt ist aus der Gruppe bestehend aus den Typen AEL, BEA, CHA, EUO, FAU, FER, KFI, LTA, LTL, MAZ, MOR, MEL, MTW, LEV, OFF, TON und MFI.

15. Katalysator gemäß einem der Ansprüche 10 bis 14, wobei der Zeolith ein SiO₂/Al₂O₃-Modul von 10 bis 300 aufweist.

16. Katalysator gemäß einem der Ansprüche 10 bis 15, wobei der Zeolith ein metallausgetauschter Zeolith ist.

17. Katalysator gemäß einem der Ansprüche 10 bis 16, wobei das Röntgendiffraktogramm (XRD) des Platin enthaltenden Zeolithen frei von Pt-Reflexen ist.

18. Verwendung eines Katalysators gemäß einem der Ansprüche 10 bis 17 als Oxidationskatalysator und Kohlenwasserstoffspeicher.

## Claims

1. Process for producing a catalyst, where a platinum-containing zeolite is prepared by means of the following steps:
a) Impregnation of a zeolite having an SiO₂/Al₂O₃ modulus of from 5 to 300 with a platinum sulfite solution,
b) Calcination of the impregnated zeolite under a protective gas atmosphere;
and the platinum-containing zeolite is processed as washcoat and applied to a catalyst support body, **characterized in that** the platinum is applied to only one component, namely the zeolite.

2. Process for producing a catalyst according to Claim 1, wherein calcination is carried out in an argon, helium, neon or nitrogen atmosphere.

3. Process for producing a catalyst according to Claim 1 or 2, wherein calcination is carried out at a temperature of from 600 to 900°C.

4. Process for producing a catalyst according to any of Claims 1 to 3, wherein a reduction is carried out after calcination.

5. Process for producing a catalyst according to Claim 4, wherein reduction is carried out using a mixture of reducing gas and an inert gas.

6. Process for producing a catalyst according to either Claim 4 or 5, wherein reduction is carried out over a period of from 3 to 7 hours.

7. Process for producing a catalyst according to any of Claims 4 to 6, wherein reduction is carried out at a temperature of from 200 to 500°C.

8. Process for producing a catalyst according to any of Claims 1 to 7, wherein the zeolite used is selected from the group consisting of the types AEL, BEA, CHA, EUO, FAU, FER, KFI, LTA, LTL, MAZ, MOR, MEL, MTW, LEV, OFF, TON and MFI.

9. Process for producing a catalyst according to any of Claims 1 to 8, wherein the catalyst support body is a metallic or ceramic monolith, a nonwoven foam or metal foam.

10. Catalyst produced by a process according to any of Claims 1 to 9.

11. Catalyst according to Claim 10, **characterized in that** the platinum-containing zeolite contains at least 2% by weight of platinum, with at least 90% of the platinum being present in the pores of the platinum-containing zeolite.

12. Catalyst according to Claim 10 or 11, **characterized in that** at least 95% of the platinum is present in the pores of the platinum-containing zeolite.

13. Catalyst according to any of Claims 10 to 12, **characterized in that** the platinum-containing zeolite contains at least 3% by weight of platinum.

14. Catalyst according to any of Claims 10 to 13, wherein the zeolite is selected from the group consisting of the types AEL, BEA, CHA, EUO, FAU, FER, KFI, LTA, LTL, MAZ, MOR, MEL, MTW, LEV, OFF, TON and MFI.

15. Catalyst according to any of Claims 10 to 14, wherein the zeolite has an SiO₂/Al₂O₃ modulus of from 10 to 300.

16. Catalyst according to any of Claims 10 to 15, wherein the zeolite is a metal-exchanged zeolite.

17. Catalyst according to any of Claims 10 to 16, wherein the X-ray diffraction pattern (XRD) of the platinum-containing zeolite is free of Pt reflections.

18. Use of a catalyst according to any of Claims 10 to 17 as oxidation catalyst and hydrocarbon store.

## Revendications

1. Procédé de fabrication d'un catalyseur, selon lequel une zéolithe contenant du platine est fabriquée par les étapes suivantes :
a) l'imprégnation d'une zéolithe ayant un module SiO₂/Al₂O₃ de 5 à 300 avec une solution de sulfite de platine,
b) la calcination de la zéolithe imprégnée dans une atmosphère de gaz protecteur ;
la zéolithe contenant du platine étant transformée en imprégnateur et appliquée sur un corps support de catalyseur, **caractérisé en ce que** le platine n'est appliqué que sur un composant, à savoir la zéolithe.

2. Procédé de fabrication d'un catalyseur selon la revendication 1, dans lequel la calcination a lieu dans une atmosphère d'argon, d'hélium, de néon ou d'azote.

3. Procédé de fabrication d'un catalyseur selon la revendication 1 ou 2, dans lequel la calcination a lieu à une température de 600 à 900 °C.

4. Procédé de fabrication d'un catalyseur selon l'une quelconque des revendications 1 à 3, dans lequel une réduction a lieu après la calcination.

5. Procédé de fabrication d'un catalyseur selon la revendication 4, dans lequel la réduction a lieu avec un mélange d'un gaz de réduction et d'un gaz inerte.

6. Procédé de fabrication d'un catalyseur selon l'une quelconque des revendications 4 ou 5, dans lequel la réduction a lieu pendant une période de 3 à 7 heures.

7. Procédé de fabrication d'un catalyseur selon l'une quelconque des revendications 4 à 6, dans lequel la réduction a lieu à une température de 200 à 500 °C.

8. Procédé de fabrication d'un catalyseur selon l'une quelconque des revendications 1 à 7, dans lequel la zéolithe utilisée est choisie dans le groupe constitué par les types AEL, BEA, CHA, EUO, FAU, FER, KFI, LTA, LTL, MAZ, MOR, MEL, MTW, LEV, OFF, TON et MFI.

9. Procédé de fabrication d'un catalyseur selon l'une quelconque des revendications 1 à 8, dans lequel le corps support de catalyseur est un monolithe métallique ou céramique, un non-tissé ou une mousse métallique.

10. Catalyseur, fabriqué par un procédé selon l'une quelconque des revendications 1 à 9.

11. Catalyseur selon la revendication 10, **caractérisé en ce que** la zéolithe contenant du platine contient au moins 2 % en poids de platine, au moins 90 % du platine se trouvant dans les pores de la zéolithe contenant du platine.

12. Catalyseur selon la revendication 10 ou 11, **caractérisé en ce qu'**au moins 95 % du platine se trouve dans les pores de la zéolithe contenant du platine.

13. Catalyseur selon l'une quelconque des revendications 10 à 12, **caractérisé en ce que** la zéolithe contenant du platine contient au moins 3 % en poids de platine.

14. Catalyseur selon l'une quelconque des revendications 10 à 13, dans lequel la zéolithe est choisie dans le groupe constitué par les types AEL, BEA, CHA, EUO, FAU, FER, KFI, LTA, LTL, MAZ, MOR, MEL, MTW, LEV, OFF, TON et MFI.

15. Catalyseur selon l'une quelconque des revendications 10 à 14, dans lequel la zéolithe présente un module SiO₂/Al₂O₃ de 10 à 300.

16. Catalyseur selon l'une quelconque des revendications 10 à 15, dans lequel la zéolithe est une zéolithe à métaux échangés.

17. Catalyseur selon l'une quelconque des revendications 10 à 16, dans lequel le diffractogramme de rayons X (XRD) de la zéolithe contenant du platine est exempt de réflexions Pt.

18. Utilisation d'un catalyseur selon l'une quelconque des revendications 10 à 17 en tant que catalyseur d'oxydation et accumulateur d'hydrocarbures.
